# EUROPEAN PATENT APPLICATION

(11) **EP 2 728 520 A1**
(43) Date of publication of application: **07.05.2014**
(21) Application number: 13182486.4
(22) Date of filing: 30.08.2013
(51) Int. Cl.: G06Q 10/04, G06Q 30/02

(54) **Techniques for forecasting retail activity**

(30) Priority: 31.10.2012 US 201213664559
(71) Applicant: NCR Corporation, Duluth, GA 30096 (US)
(72) Inventor: Hughes, Jeffrey, Irving, TX Texas 75038 (US); Finley, Michael, Roswell, GA Georgia 30076 (US); Gibson, Ray, Lewisville, TX Texas 75056 (US)
(74) Representative: MacLeod, Roderick William

(57) **Abstract**

Techniques for forecasting retail activity are provided. External events to a retailer are evaluated in view of attributes and associations of the retailer and in view of operational metrics associated with the retailer. Based on the evaluation, recommendations for forecasting resources are dynamically presented to the retailer.

## Description

Automation for goods and services has reached record levels in society. Examples are everywhere from online banking and purchasing to a wide-range of devices and physical appliances that include computing and networking capabilities, which were just wishful dreams only a decade ago. For the most part, these advances have occurred because of breakthroughs in electronics and wireless communications, which have allowed complex processing and network connectivity to be achieved in the smallest of physical devices, such as a smart phone or other handheld computing devices, for relatively small cost and effort.

However, the retail automation has focused on making the order process and purchase process convenient for the consumer and the retailer. In fact, there has been little automation associated with managing inventory or business operations based on the evolving technology.

As an example, consider a restaurant that needs to determine how much staff to have on hand for a particular night of the week. For the most part, the management of this restaurant will use historical data for business traffic at the restaurant based on the night of the week and based on the calendar date for that night of the week. This may prove fairly accurate in some situations but does not account for a variety of other circumstances that may adversely alter (either up or down) the business traffic for the given night of the week.

Another approach used by retailers to determine how much staff or resources are needed for any given day is based on a gut feeling or a hunch of the manager and has very little to do with science, statistics, or in some cases even common sense.

It is clear that better techniques are needed to assist retailers in forecasting needed resources on any given day for planning business operations.

In various embodiments, techniques for forecasting retail activity are presented. According to an embodiment, a method for forecasting retail activity is provided.

Specifically, a retailer registers for receiving dynamic and real time forecasting recommendations. Next, factors associated with operational metrics of the retailer are mined; the factors may be external to a business associated with the retailer. Then, the factors are evaluated for impacts on the operational metrics. Finally, the forecasting recommendations are communicated to the retailer; the forecasting recommendations derived from the impacts.

According to a first aspect of the present invention there is provided a processor-implemented method programmed in memory of a non-transitory processor-readable medium and to execute on one or more processors of a server configured to execute the method, comprising: registering, by the server, a retailer for receiving dynamic and real time forecasting recommendations; mining, by the server, for factors associated with operational metrics of the retailer, the factors external to a business associated with the retailer; evaluating, by the server, the factors for impacts on the operational metrics; and communicating, by the server, the forecasting recommendations to the retailer, the forecasting recommendations derived from the impacts.

Registering a retailer optionally further includes acquiring the operational metrics from the retailer during the registration process.

Registering a retailer optionally further includes permitting the retailer to select a business type from a list of available business types for the retailer during the registration process.

Registering a retailer optionally further includes acquiring one or more delivery channel preferences from the retailer for communicating the forecasting recommendations.

Registering a retailer optionally further includes dynamically pushing a retail forecasting app to one or more devices identified by the retailer during the registration process.

Mining for factors optionally further includes mapping the factors to identifying information assigned to the retailer.

Evaluating the factors optionally further includes assigning relationships between each factor and one or more of the operational metrics.

Assigning relationships optionally further includes weighting each relationship.

Weighting each relationship optionally further includes scoring the weighted relationships.

Scoring the weighted relationships optionally further includes mapping the scored relationships to projected increases or projected decreases in each of the operational metrics to determine the impacts.

Communicating the forecasting recommendations optionally further includes sending a text message to a mobile device of the retailer having the forecast recommendations.

Communicating the forecasting recommendations optionally further includes sending the forecast recommendations as interactive data to a retail forecaster app installed on a device of the retailer.

According to a second aspect of the present invention there is provided a system comprising: a memory of a server machine configured with a retail forecaster; and a memory of a device configured with a retail forecaster agent, wherein the retail forecaster is configured to register the device and a retailer for forecast recommendations based on analysis by the retail forecaster of external events to the retailer, and the retail forecaster agent is configured to automatically and dynamically receive the forecast recommendations and adjust resource allocations for the retailer based on those forecast recommendations.

The device may be a mobile device associated with the retailer.

According to a third aspect of the present invention there is provided a processor-implemented method programmed in memory of a non-transitory processor-readable medium and to execute on one or more processors of a device configured to execute the method, comprising: receiving, by device, a real time forecast recommendation from a retail forecaster that uses external factors to a retailer to provide the forecast recommendation; and using, by the device, one or more retail services to adjust resource allocations for the retailer based on the forecast recommendation.

The method optionally further comprises interacting, by the device, with the retail forecaster to adjust criteria associated with providing the forecast recommendation after a date and time associated with the forecast recommendation passes.

The method optionally further comprises providing, by the device, operational metrics to the retail forecaster after a date and time associated with the forecast recommendation passes.

Receiving optionally further includes acquiring the forecast recommendation as a text message on the device.

Receiving optionally further includes acquiring the forecast recommendation as interactive data on the device.

Using optionally further includes automatically forwarding the forecast recommendation to at least one retail service that automatically alters plans or schedules for the adjusted resource allocations based on the forecast recommendation.

FIG. 1 is a diagram of a method for forecasting retail activity, according to an example embodiment.

FIG. 2 is a diagram of another method for forecasting retail activity, according to an example embodiment.

FIG. 3 is a diagram of a retail activity forecasting system, according to an example embodiment.

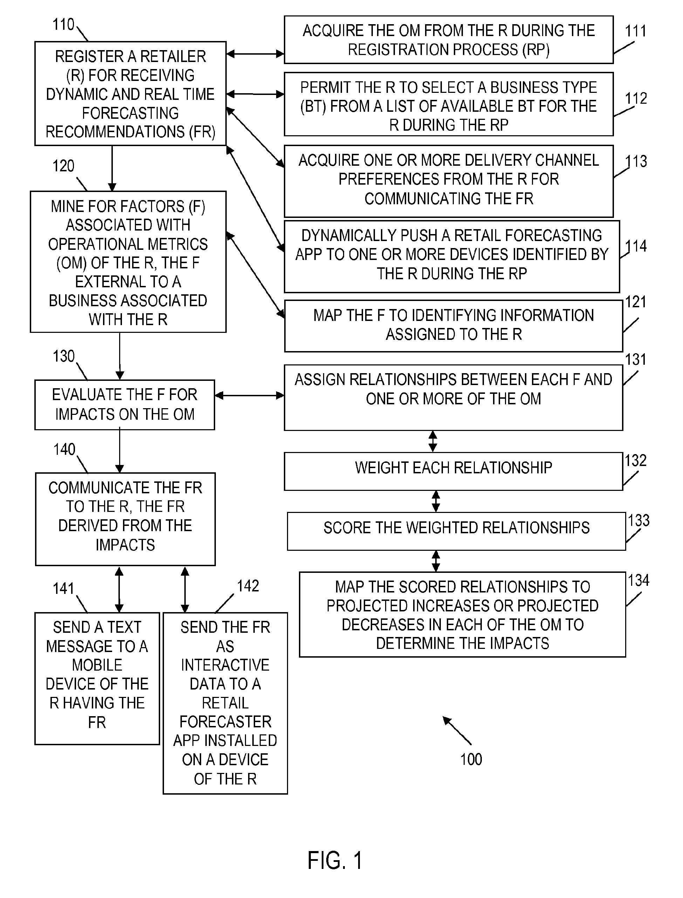

FIG. 1 is a diagram of a method 100 for forecasting retail activity, according to an example embodiment. The method 100 (hereinafter "retail forecaster") is implemented as instructions programmed and residing on a non-transitory computer-readable (processor-readable) storage medium and executed by one or more processors. The processors are specifically configured and programmed to process the retail forecaster. The retail forecaster operates over a network. The network is wired, wireless, or a combination of wired and wireless.

In an embodiment, the retail forecaster operates on a Point-Of-Sale (POS) server or terminal that may be local to a retail establishment or remote from the retail establishment, such as via a cloud processing environment. In some cases, the retail forecaster is offered as a third-party service to the retailer, such that it is not integrated into or a part of the POS systems of the retailer.

In one situation, the retailer is a restaurant manager and the retail forecaster is implemented within the NCR (trade mark) Pulse Real Time (trade mark) product offering distributed by NCR Corporation of Duluth, Georgia. Here, the retail forecaster delivers real-time messages to a POS system of the restaurant or a mobile device of the manager (such as via an app or text message) to identify situations that alter a forecast for resources (people and/or supplies) for the restaurant in real time. The manner in which the retail forecaster achieves this is discussed herein and below and the mechanism for communicating the situations (factors, events, etc.) can be different from the Pulse Real Time product offering.

The retail forecaster evaluates and/or considers external factors to a retailer that can affect resource forecasting for that retailer. Some example factors include, by way of example only, sporting events (local to the retailer and/or national), holidays, promotions, weather forecast, where loyal customers of the retailer are physically located at any given point in time, known pending social-media coupons (such as Groupon (trade mark) and the like), and others. The retail forecaster can use a zip (postal) code, city, town, state, and other recognized identity associations for the retailer to collect the factors specific to the retailer. The factors are evaluated to determine whether they are known to alter operational metrics of the retailer (based on retailer's business type); such operational metrics can include, by way of example only, revenue, labor usage, supplies, energy needs, water needs, and the like.

Consider the following situation, by identifying that a bar (type of retailer that sells alcohol (for instance)) in Dallas (identifying association with the retailer) is scheduled to be open during a home NFL football game (external factor) for the Dallas Cowboys (trade mark). The retail forecaster uses this information to notify the bar that an increase guest count is anticipated (can even be as detailed as a specific anticipated percentage increase for guests) at the bar for that game (specific day and time range). The retail forecaster can also make suggestions to the bar in terms of desired staff to have on hand for the time range before, during, and after the game along with recommendations as to the most-likely top selling brands or product (types of alcohol) that the bar can expect to be selling.

In a different example, the retail forecaster can use a weather forecast to notify a retailer to cut staff when extremes occur for a given day and even times during that day. Weather can also positively affect a retailer, such as an ice cream retailer on the first scheduled hot day of the season where more product and staff may be needed for an expected high demand.

One now appreciates how the retail forecaster can permit retailers to dynamically alter existing resource forecasts based on external event evaluations performed by the retail forecaster on behalf of the retailer.

Different embodiments and attributes of the processing associated with the retail forecaster are now discussed with reference to the FIG. 1.

At 110, the retail forecaster registers a retailer for receiving dynamic and real time forecasting recommendations. The retailer is identified by an identifier and credentials. The forecasting recommendations include specific recommendations for increasing or decreasing resources, such as ensure that at least N staff is on hand, increase staff by X, decrease staff by Y, insure at least N product is on hand, increase product by X, decrease product by Y, etc.

According to an embodiment, at 111, the retail forecaster acquires operational metrics from the retailer during the registration process. This can include such things as X staff is needed for occupancy or traffic of Y, for Z customers N staff is needed, with Z customers N product is consumed, etc.

In an embodiment, at 112, the retail forecaster permits the retailer to select a business type from a list of available business types for the retailer during the registration process. Here, the knowledge learned by the retail forecaster can be used to assign factors to specific business types, such as football increases businesses of type bar where beer is sold and games are shown on big screens. Additionally, some external factors can increase business for some business types but decrease it for other business types (football may decrease business for barbers).

In still another case, at 113, the retail forecaster acquires one or more delivery channel preferences from the retailer for communicating the forecasting recommendations. For example, a retailer may want the forecasting recommendations texted to a mobile phone of a specific retail manager or person for the retailer that can adjust planning for resources based on the forecasting recommendations. In another case, the retailer may want the forecasting recommendations sent in a specific format to a specific automated scheduling or planning tool of the retailer where the forecasting recommendations can be automatically processed.

In still another case, at 114, the retail forecaster can dynamically push a retail forecasting app to one or more devices identified by the retailer during the registration process.

At 120, the retail forecaster mines for factors associated with operational metrics of the retailer. The factors are external to a business associated with the retailer. Example factors and operational metrics are provided above.

In an embodiment, at 121, the retail forecaster maps the factors to identifying information assigned to the retailer. This can include such things as business type, location (specific, such as zip code; local area, such as city; and general, such as state or region), etc. Factors can have impacts (positive or negative) on operational metrics for a specific retailer and factors are assigned based on identifying information.

At 130, the retail forecaster evaluates the factors for impacts on the operational metrics. So, positive or negative projections on retail resources (defined in the operational metrics) occur based on the projected factors (single factor or combination of factors). These projections can be defined in the operational metrics and the operational metrics can be partially (entirely or not at all) acquired from the retailer during registration and/or acquired based on proper operation and analysis of the retail forecaster for other retailers subscribing to the retail forecaster.

According to an embodiment, at 131, the retail forecaster assigns relations between each factor and one or more of the operational metrics. For example, a factor for an external event of NFL football creates a relationship to an operational metric for volume of beer needed.

Continuing with the embodiment of 131 and at 132, the retail forecaster weights each relationship. So, in the example of 131 the confidence of the relationship increasing beer sales based on an NFL football can be 75% based on analysis of historical data collected by the retail forecaster for the retailer and other similarly situated retailers.

Still continuing with the embodiment of 132 and at 133, the retail forecaster scores the weighted relationships. So, other weighted relationships for other factors occurring when the NFL game occurs, such as a trade show in a nearby town can be summed in a score to determine what the beer volume is going to be on any given day.

Continuing with the embodiment of 133 and at 134, the retail forecaster maps the scored relationships to projected increases or projected decreases in each of the operational metrics to determine the impacts. A specific recommended volume of beer can be acquired by using the score to map to a specific increase or decrease in the volume for the beer. The mapping may occur as a range of score values as well so it can be more flexible in application.

It is noted that the processing associated with the steps 131-134 is provided as one example and that other computational and statistical based calculations can be deployed with the teachings presented herein, such that specific forecasting recommendations are derived from the impacts.

At 140, the retail forecaster communicates the forecasting recommendations to the retailer; this is done in real time and dynamically. The forecasting recommendations are derived from the impacts (as discussed above).

According to an embodiment, at 141, the retail forecaster sends a text message to a mobile device of the retailer having the forecasting recommendations.

In another case, at 142, the retail forecaster sends the forecasting recommendations as interactive data (graphs that can change assumptions, links, etc.) to a retail forecaster app installed on a device of the retailer.

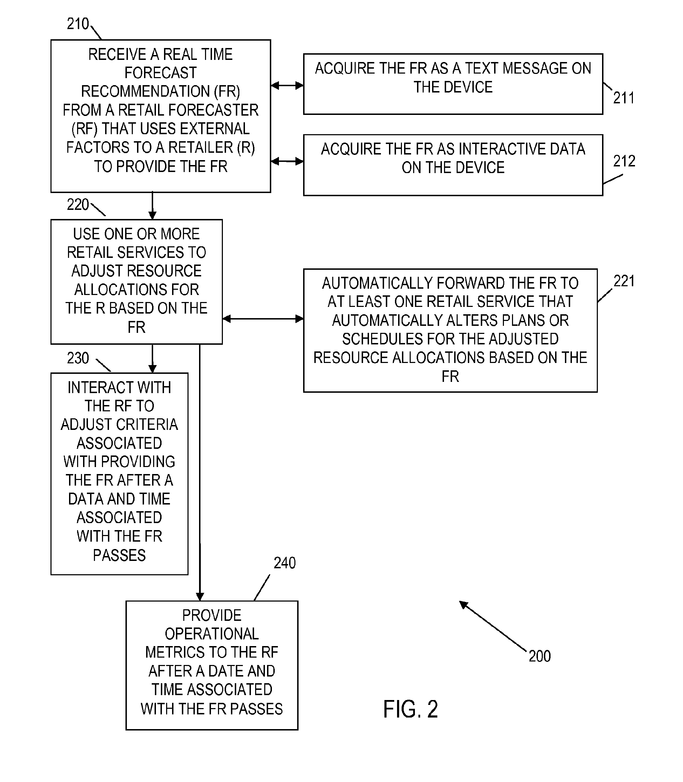

FIG. 2 is a diagram of another method 200 for forecasting retail activity, according to an example embodiment. The method 200 (hereinafter "retail forecaster agent") is implemented as instructions programmed within a non-transitory computer-readable (processor-readable) storage medium that executes on one or more processors of a handheld device of a retailer or a POS device of the retailer; the processors of the device are specifically configured to execute the retail forecaster agent. The retail forecaster agent is operational over a network; the network is wired, wireless, or a combination of wired and wireless.

Whereas the retail forecaster (the FIG. 1 above) describes processing associated with evaluating external factors for a retailer to alter resource forecasts, the retail forecaster agent describes processing on devices associated with the retailer for receiving and interacting with the retailer forecaster.

At 210, the retail forecaster agent receives a real time forecast recommendation from a retail forecaster that uses external factors to provide the forecast recommendation. An example retail forecaster was presented above in detail with reference to the FIG. 1.

According to an embodiment, at 211, the retail forecaster agent acquires the forecast recommendation as a text message on the device.

In another case, at 212, the retail forecaster agent acquires the forecast recommendation as interactive data on the device. The interactive data can permit a user to interact with the recommendation to change assumptions or alter factors to change the recommendation.

At 220, the retail forecaster agent uses one or more retail services to adjust resource allocations for the retailer based on the forecast recommendation.

For example, at 221, the retail forecaster agent automatically forwards the forecast recommendation to at least one retail service that automatically alters plans or schedules for the adjusted resource allocations based on the forecast recommendation. So, the process can be entirely automated within the retailer using retailer based systems and services.

Alternatively, a manager can manually uses services to systems to alter the plans or schedules or inventories for the resources based on the forecast recommendation.

In an embodiment, at 230, the retail forecaster agent interacts with the retail forecaster to adjust criteria associated with providing the forecast recommendation after a date and time associated with the forecast recommendation passes. Here, a dynamic learning feedback loop is created between the retailer and the retail forecaster and the retail forecaster has a similar loop with other retailers; this permits the forecast recommendations to be improved over time by the retail forecaster.

According to an embodiment, at 240, the retail forecaster agent provides operational metrics to the retail forecaster after a data and time associated with the forecast recommendation passes. So, actual staffing levels, product sold, etc. are communicated to the retail forecaster for the retail forecaster to compare with the original forecast recommendation. This too is similar in nature to the processing at 230 in that it provides a mechanism for the retail forecaster to improve subsequent forecasting recommendations.

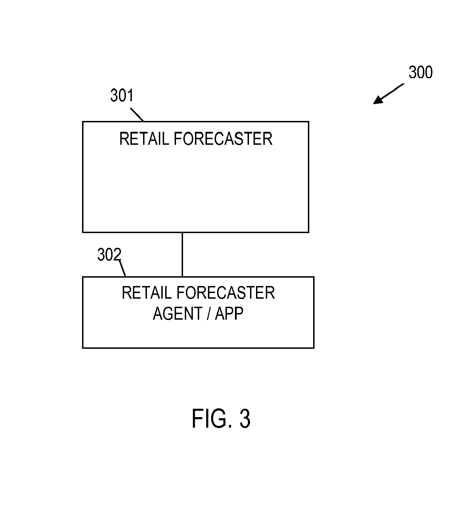

FIG. 3 is a diagram retail activity forecasting system 300, according to an example embodiment. The retail activity forecasting system 300 is implemented as executable instructions and programmed within memory of processors or a non-transitory computer-readable (processor-readable) storage medium that executes on one or more processors of one or multiple computing devices; the processors of the computing devices are specifically configured to execute the retail activity forecasting system 300. The retail activity forecasting system 300 is operational over a network; the network is wired, wireless, or a combination of wired and wireless.

The retail activity forecasting system 300 implements, inter alia, server-side processing of the retail forecaster associated with the method 100 (FIG. 1) and the client-side processing of the retail forecaster agent associated with the method 200 (FIG. 2).

The retail activity forecasting system 300 includes a retail forecaster 301 and a retail forecaster agent 302. Each of these will be discussed in turn.

The retail activity forecasting system 300 includes a server or cloud-based processing environment having processors with memory configured with the retail forecaster 301, which executes on the processors of the server or the cloud-based processing environment. Example aspects of the retail forecaster 301 were discussed above with respect to the FIG. 1.

The retail forecaster 301 is configured to register the device and a retailer for forecast recommendations based on analysis by the retail forecaster 301 of external events to the retailer. This processing was described in detail above with reference to the FIG. 1.

The retail activity forecasting system 300 also includes a POS device or handheld device of a retailer having one or more processors with memory configured with the retail forecaster agent 302, which executes on the one or more processors of the POS and/or handheld device. Example aspects of the retail forecaster agent 302 were discussed above with respect to the FIG. 2.

The retail forecaster agent 302 is configured to automatically and dynamically receive the forecast recommendations and adjust resource allocations for the retailer based on those forecast recommendations.

According to an embodiment, the device that processes the retail forecaster agent 302 is a mobile device (such as a smart phone or a tablet) registered to or associated with the retailer.

It is noted that the device in other cases can be associated with any component of a POS system for the retailer, such as a POS terminal and the like.

The above description is illustrative, and not restrictive. Many other embodiments will be apparent to those of skill in the art upon reviewing the above description.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A processor-implemented method (100) programmed in memory of a non-transitory processor-readable medium and to execute on one or more processors of a server configured to execute the method, comprising:
registering, by the server, a retailer for receiving dynamic and real time forecasting recommendations (110);
mining, by the server, for factors associated with operational metrics of the retailer, the factors external to a business associated with the retailer (120);
evaluating, by the server, the factors for impacts on the operational metrics (130); and
communicating, by the server, the forecasting recommendations to the retailer, the forecasting recommendations derived from the impacts (140).

2. The method of claim 1, wherein registering further includes acquiring the operational metrics from the retailer during the registration process (111).

3. The method of claim 1 or 2, wherein registering further includes permitting the retailer to select a business type from a list of available business types for the retailer during the registration process (112).

4. The method of any preceding claim, wherein registering further includes acquiring one or more delivery channel preferences from the retailer for communicating the forecasting recommendations (113).

5. The method of any preceding claim, wherein registering further includes dynamically pushing a retail forecasting app to one or more devices identified by the retailer during the registration process (114).

6. The method of any preceding claim, wherein mining further includes mapping the factors to identifying information assigned to the retailer (121).

7. The method of any preceding claim, wherein evaluating further includes assigning relationships between each factor and one or more of the operational metrics (131).

8. The method of claim 7, wherein assigning relationships further includes weighting each relationship (132).

9. The method of claim 8, wherein weighting each relationship further includes scoring the weighted relationships (133).

10. The method of claim 9, wherein scoring the weighted relationships further includes mapping the scored relationships to projected increases or projected decreases in each of the operational metrics to determine the impacts (134).

11. The method of any preceding claim, wherein communicating further includes sending a text message to a mobile device of the retailer having the forecast recommendations (141).

12. The method of any preceding claim, wherein communicating further includes sending the forecast recommendations as interactive data to a retail forecaster app installed on a device of the retailer (142).

13. A system (300) comprising:
a memory of a server machine configured with a retail forecaster (301); and
a memory of a device configured with a retail forecaster agent (302);
wherein the retail forecaster (301) is configured to register the device and a retailer for forecast recommendations based on analysis by the retail forecaster (301) of events external to the retailer, and the retail forecaster agent (302) is configured to automatically and dynamically receive the forecast recommendations and adjust resource allocations for the retailer based on those forecast recommendations.

14. The system of claim 13, wherein the device is a mobile device associated with the retailer.
